# EUROPEAN PATENT SPECIFICATION

(11) **EP 4 001 032 B1**
(45) Date of publication and mention of the grant of the patent: **03.01.2024**
(21) Application number: 21206701.1
(22) Date of filing: 05.11.2021
(51) Int. Cl.: B60T 11/236, B60T 15/02, B60T 15/04, B60T 15/18, B60T 15/20, B60T 15/30, B60T 15/34, B60T 15/36, B60T 17/04, B60T 17/22

(54) **FLOW CONTROL VALVE AND BRAKE SYSTEM**
DURCHFLUSSREGELVENTIL UND BREMSSYSTEM
VANNE DE RÉGULATION DE FLUX ET SYSTÈME DE FREINAGE

(30) Priority: 16.11.2020 JP 2020190439
(43) Date of publication of application: 25.05.2022
(73) Proprietor: Nabtesco Corporation, Tokyo 102-0093 (JP)
(72) Inventor: Otsuji, Kiyoshiro, Tokyo, 102-0093 (JP); Wasada, Hideki, Tokyo, 102-0093 (JP)
(74) Representative: Grünecker Patent- und Rechtsanwälte PartG mbB

(56) References cited:
- DE-A1-102014 112 780
- GB-A- 2 114 265
- GB-A- 2 188 712
- JP-A- H0 867 241
- JP-A- 2004 262 405
- US-A- 4 432 586
- US-B2- 10 059 320

## Description

### TECHNICAL FIELD

The present invention relates to a flow control valve according to the preamble of independent claim 1 and a brake system according to the preamble of independent claim 8.

### BACKGROUND

Such a flow control valve and such a brake system are known from JP 2004 262405 A, which is regarded as being the closest prior art.

In a piston sealing arrangement according to GB 2 114 265 A, there is a grease retaining cavity between a wear band and a sealing ring. This cavity is partially formed by an annular recess in a face of the piston seal and partially by a shape of a rear face of the wear band.

An operation mechanism for a parking brake pedal shown in GB 2 188 712 A comprises an annular cup seal disposed within an annular groove which is formed in an outer periphery of a piston to store therein lubricant such as grease for sealing the piston. The piston is formed therein with a passage for communication between front and rear air chambers and is further formed therein with an end bore in communication with the passage.

US 4 432 586 A discloses a brake control system for a motor vehicle comprising a power piston having a blind bore formed therein. At least one axial groove filled with lubricant grease is formed in an internal surface of said blind bore and extends throughout the full length of said blind bore for continuous communication of an interior of said blind bore with a chamber.

Flow control valves outputting, in response to input of a commanded pressure, a high-pressure fluid with a pressure corresponding to the commanded pressure and a flow rate greater than a flow rate that causes the commanded pressure have been known. JP 2004 262405 A provides an example of such a valve. In the valve described in JP 2004 262405 A, an intake-exhaust valve shaft moves up or down depending on a pilot pressure supplied from a solenoid valve, and this vertical movement of the intake-exhaust valve shaft causes a feed valve to move up or down to open or close a channel between an air supply chamber and an output chamber. In this way, the valve outputs the high-pressure air at a large flow rate from the air supply chamber to the output chamber.

### SUMMARY

Between the valve that opens and closes between the air supply chamber and the output chamber, such as the air supply valve of JP 2004 262405 A, and a guide section for guiding the vertical movement of the valve, a sealing member may be provided to prevent a fluid in the output chamber from leaking out through a space between the valve and the guide section. In this case, there is a risk of early deterioration of the sealing member due to drying and the like.

The present invention has been made in view of such circumstances, and an object of the invention is to prevent deterioration of the sealing member.

A flow control valve for brakes according to the invention defined in independent claim 1 comprises: an introduction chamber into which fluid is introduced from a pressure fluid source; an output chamber connected to a brake device, the output chamber communicating with the introduction chamber through a passage; an input chamber to which a commanded pressure for generating a target braking force in the brake device is supplied; a first valve element moving depending on a differential pressure between the command pressure and a pressure in the output chamber to open and close the passage, the first valve element closing the passage at least when the pressure in the output chamber is equal to or greater than the command pressure; a guiding portion guiding movement of the first valve element; a sealing member provided between the first valve element and the guiding portion, the sealing member preventing the fluid from passing between the first valve element and the guiding portion; and a retaining portion provided in at least one of the first valve element or the guiding portion, the retaining portion retaining lubricant supplied to a contacting surface between the first valve element and the guiding portion, wherein a distance between the sealing member and the retaining portion in a moving direction of the first valve element is equal to or smaller than a movable distance of the first valve element.

In the flow control valve for brakes, the sealing member and the retaining portion may be provided on a same side of the first valve element or the guiding portion.

In the flow control valve for brakes, the first valve element and the guiding portion may be made of brass or aluminum.

In the flow control valve for brakes, high-pressure air generated by an oilless air compressor may be introduced into the introduction chamber as the fluid.

The flow control valve may further comprise a second valve element moving depending on a differential pressure between the command pressure and the pressure in the output chamber to move the first valve element. The second valve element may move away from the first valve element to cause an atmospheric open state in which the first valve element closes the passage and the output chamber is opened to atmosphere, and the second valve element may contact the first valve element from the atmospheric open state and move the first valve element to cause an open state in which the first valve element opens the passage and the output chamber is shut off from the atmosphere.

In the flow control valve for brakes, the second valve element may contact the first valve element from the atmospheric open state and move the first valve element to cause a close state in which the first valve element closes the passage and the output chamber is shut off from the atmosphere.

In the flow control valve for brakes, the sealing member may seal off the introduction chamber from the atmosphere.

A brake system for railway vehicles according to the invention is defined in claim 8.

The brake system for railway vehicles may further comprise an oilless air compressor generating high-pressure air that is to be introduced into the introduction chamber as the fluid.

### ADVANTAGEOUS EFFECTS

According to the aspects of the invention, it is possible to prevent deterioration of the sealing member.

### BRIEF DESCRIPTION OF THE DRAWINGS

Fig. 1 is a configuration diagram of a brake system equipped with a flow control valve according to an embodiment.
Fig. 2 is a schematic sectional view of the flow control valve according to the embodiment.
Fig. 3 is an enlarged schematic sectional view of a portion enclosed by the double-dotted line and designated as III in Fig. 2, according to the embodiment.
Fig. 4 is a schematic sectional view of the flow control valve in a close state according to the embodiment.
Fig. 5 is a schematic sectional view of the flow control valve in an open state according to the embodiment illustrating its configuration.
Fig. 6 is an enlarged schematic sectional view of a sealing member 15 and a retainer 16 according to the embodiment.
Fig. 7 is a schematic sectional view of a flow control valve according to a first modification example.
Fig. 8 is a schematic sectional view of a flow control valve according to a second modification example.

### DESCRIPTION OF THE EMBODIMENTS

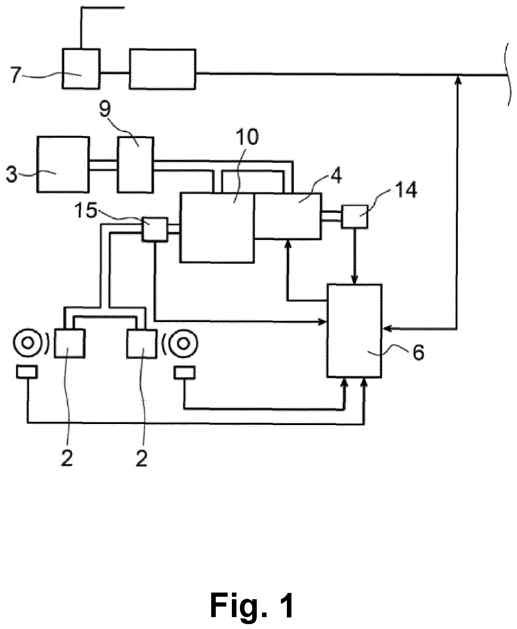

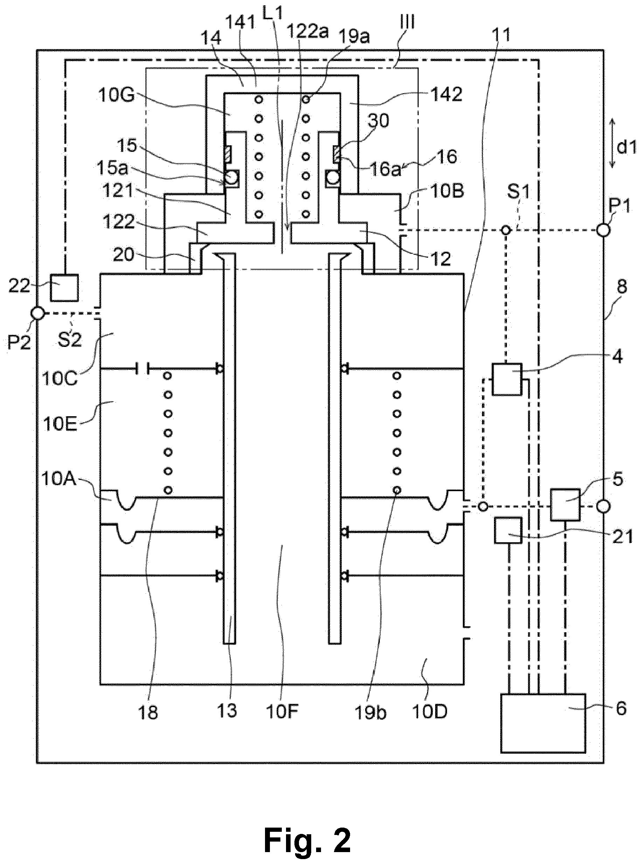

Embodiments of the present invention will now be described with reference to the appended drawings. Fig. 1 is a configuration diagram of a brake system 1 equipped with a flow control valve 10. Fig. 2 is a schematic sectional view of the flow control valve 10 showing other components of the brake system 1 together.

This embodiment describes a case where the flow control valve 10 is a brake flow control valve 10 provided in the brake system 1. The brake system 1 in this embodiment is a brake system for railroad vehicles. In the brake system for railroad vehicles, the flow control valves 10 may be provided respectively for each single bogie of a railroad vehicle, or for each single wheel. In addition to the flow control valve 10, the brake system 1 includes a brake device for braking the railroad vehicle, a commanded-pressure supply valve 4 and a commanded-pressure exhaust valve 5, and a brake control unit (control circuit) 6 that controls the commanded-pressure supply valve 4 and the commanded-pressure exhaust valve 5. The brake device includes a brake cylinder 2 and is driven by supply of a high-pressure fluid into the brake cylinder 2 when braking a railroad vehicle. In the embodiment, the commanded-pressure supply valve 4 and the commanded-pressure exhaust valve 5 are solenoid valves. Materials for the components of the commanded-pressure supply valve 4 and the commanded-pressure exhaust valve 5 are, for example, pure iron or stainless steel. The commanded-pressure exhaust valve 5 is not shown in Fig. 1. The brake system 1 according to the embodiment also includes an air compressor 3 that generates high-pressure air. Thus, the high-pressure air is supplied to the brake cylinder 2 to drive the brake system.

The brake system 1 according to the embodiment includes a housing 8 as shown in Fig. 2, and the flow control valve 10, the commanded-pressure supply valve 4, the commanded-pressure exhaust valve 5, and the brake control unit 6 are disposed in the housing 8. The housing 8 has an air supply port P1 to which high-pressure air compressed by the air compressor 3 is supplied, and an output port P2 connected to the brake cylinder 2. The air supply port P1 is connected to the air compressor 3 via a tank 9, for example, thereby the high-pressure air compressed by the air compressor 3 is supplied to the air supply port P1. The air supply port P1 is also connected to the commanded-pressure supply valve 4 through an air supply passage S1. This allows the high-pressure air compressed by the air compressor 3 to be supplied to the commanded-pressure supply valve 4.

The flow control valve 10 supplies an introduced high-pressure air to the brake cylinder 2 upon receiving a brake command signal from a brake controller 7 installed in, for example, a driver's seat of the railroad vehicle. In the example shown in Fig. 2, the flow control valve 10 includes an input chamber 10A, an introduction chamber 10B, an output chamber 10C, a first valve element 12, a second valve element 13, a guiding portion 14, a sealing member 15, and a retaining portion 16.

In the example shown in Fig. 2, the flow control valve 10 has a main body 11. The input chamber 10A, the introduction chamber 10B, and the output chamber 10C are formed in the main body 11. An atmospheric open chamber 10D that is open to the atmosphere is further formed in the main body 11. In addition, a feedback chamber 10E connected to the output chamber 10C is formed in the main body 11. In the example shown in Fig. 2, the input chamber 10A and the feedback chamber 10E are separated by a diaphragm 18.

A commanded pressure for generating a target braking force in the brake device is supplied to the input chamber 10A. In this system, the commanded-pressure supply valve 4 supplies the commanded pressure to the input chamber 10A. The commanded-pressure exhaust valve 5 discharges the commanded pressure from the input chamber 10A. The commanded-pressure supply valve 4 and the commanded-pressure exhaust valve 5 are opened and closed under the control of the brake control unit 6 to adjust the pressure in the input chamber 10A.

Fluid is introduced into the introduction chamber 10B from a pressure fluid source. The brake system 1 according to the embodiment also includes an air compressor 3 that generates high-pressure air. In this case, as the fluid, the high-pressure air generated by the air compressor 3 is introduced into the introduction chamber 10B.

In the embodiment, the pressure fluid source for introduces the fluid into the introduction chamber 10B also introduces the fluid into the input chamber 10A to achieve the commanded pressure in the input chamber 10A. In the embodiment, the air supply port P1 is connected to the commanded-pressure supply valve 4 as described above via the air supply passage S1, and also to the introduction chamber 10B. Thus, the high-pressure air generated by the air compressor 3 is introduced into the introduction chamber 10B. In the embodiment, the fluid introduced into the input chamber 10A to realize the commanded pressure in the input chamber 10A and the fluid introduced into the introduction chamber 10B are both high-pressure air generated by the air compressor 3. The fluid introduced into the input chamber 10A for realizing the commanded pressure in the input chamber 10A and the fluid introduced into the introduction chamber 10B are not limited to the air. Another example of the fluid is a liquid. The commanded pressure inputted to the input chamber 10A and the pressure outputted to the brake cylinder 2 through the introduction chamber 10B and the output chamber 10C may be hydraulic pressure. Unless otherwise specified, the embodiment is described based on the case where the fluid introduced into the input chamber 10A and the fluid introduced into the introduction chamber 10B are both the air.

The output chamber 10C is connected to the brake device and also communicates with the introduction chamber 10B through a passage. In this embodiment, the output chamber 10C communicates with the brake cylinder 2 in the brake device. In the embodiment, the output port P2 is connected to the output chamber 10C via the output passage S2. Thus, the output chamber 10C communicates with the brake cylinder 2 via the output port P2 and the output passage S2.

The first valve element 12 is a member that opens and closes the passage that connects the introduction chamber 10B and the output chamber 10C. In the example shown in Fig. 2, the first valve element 12 has a cylindrical lateral portion 121 and a bottom portion 122 provided at one end of the lateral portion 121. An opening 122a is formed at the center of the bottom portion 122.

In the example of Fig. 2, the flow control valve 10 includes a valve seat 20 and a spring 19a. The valve seat 20 is connected to the main body 11, and the valve seat 20 and the main body 11 define the introduction chamber 10B and the output chamber 10C. As an example, the valve seat 20 is formed integrally with the main body 11. The first valve element 12 opens the passage between the introduction chamber 10B and the output chamber 10C by moving away from the valve seat 20, and closes the passage by contacting the valve seat 20. In the example of Fig. 2, the valve seat 20 faces the bottom portion 122 of the first valve element 12, and the passage is closed when the bottom portion 122 contacts the valve seat 20. The first valve element 12 is biased by the spring 19a in a direction toward the valve seat 20 (lower side in Fig. 2). In the state illustrated in Fig. 2, the spring 19a causes the first valve element 12 to contact the valve seat 20 to close the passage between the supply chamber 10B and the output chamber 10C. As an example, the material of the first valve element 12 contains brass or aluminum. For example, the first valve element 12 is made of brass or aluminum.

The second valve element 13 is a member that moves depending on a differential pressure (pressure difference) between the commanded pressure and the pressure in the output chamber 10C. In the example of Fig. 2, the second valve element 13 has an cylindrical shape extending in a direction in which the lateral portion 121 of the first valve element 12 extends. The second valve element 13 has open ends at the side where the first valve element 12 is situated and on the other side opposite to the side where the first valve element 12 is situated. In the example shown in Fig. 2, one end of the second valve element 13 opposes the bottom portion 122 of the first valve element 12. The second valve element 13 has a hollow portion 10F thereinside. The hollow portion 10F is open to the atmosphere since it is connected to the atmospheric open chamber 10D.

In the example shown in Fig. 2, the second valve element 13 is connected to the diaphragm 18. Thus, the second valve element 13 moves in the vertical direction in Fig. 2 following the movement of the diaphragm 18. The flow control valve 10 further includes a spring 19b that biases the diaphragm 18 connected to the second valve element 13 toward the side opposite (lower side in Fig. 2) to the side where the first valve element 12 is situated. In the state illustrated in Fig. 2, the second valve element 13 moves away from the first valve element 12 since the diaphragm 18 is moved away from the first valve element 12 by the spring 19b.

When the fluid is introduced from the commanded-pressure supply valve 4 to the input chamber 10A and the commanded pressure is realized, a pressure difference between the input chamber 10A and the feedback chamber 10E causes the diaphragm 18 to move toward the side where the first valve element 12 is situated (upper side in Fig. 2) such that the input chamber 10A is expanded. The second valve element 13 also moves to the side where the first valve element 12 is situated following the movement of the diaphragm 18. Since the feedback chamber 10E communicates with the output chamber 10C, it can be said that the second valve element 13 moves depending on the differential pressure (pressure difference) between the commanded pressure or the pressure in the input chamber 10A adjusted by the command pressure supply valve 4 and the pressure in the output chamber 10C communicated with the feedback chamber 10E.

The first valve element 12 moves depending on the differential pressure (pressure difference) between the commanded pressure and the pressure in the output chamber 10C to open and close the passage between the introduction chamber 10B and the output chamber 10C. In the embodiment, the second valve element 13 moves depending on the differential pressure between the commanded pressure and the pressure in the output chamber 10C and the second valve element 13 contacts the first valve element 12 to move the first valve element 13, thereby opening and closing the passage.

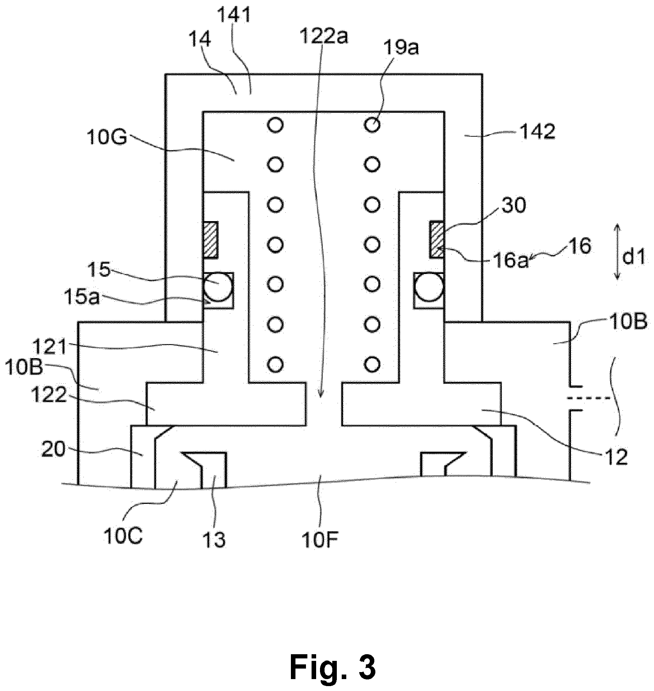

The second valve element 13 moves to cause an open state and an atmospheric open state. The second valve element 13 also moves to cause a close state. The flow control valve 10 of Fig. 2 is in the atmospheric open state. Fig. 3 shows the area enclosed by the double-dotted line and designated as III in Fig. 2. As shown in Fig. 3, in the atmospheric open state, the second valve element 13 is separated from the first element 12. Since the second valve element 13 is separated from the first element 12, the first element 12 closes the passage between the introduction chamber 10B and the output chamber 10C, and the output chamber 10C is opened to the atmosphere. This allows the high-pressure air to be exhausted from the brake cylinder 2. In the example shown in Figs. 2 and 3, the second valve element 13 is separated from the first element 12, thus the output chamber 10C is connected to the hollow portion 10F through the space between the first element 12 and the second element 13. Consequently, the output chamber 10C is connected to the atmospheric open chamber 10D through the hollow portion 10F, and the high-pressure air is exhausted from the brake cylinder 2 connected to the output chamber 10C.

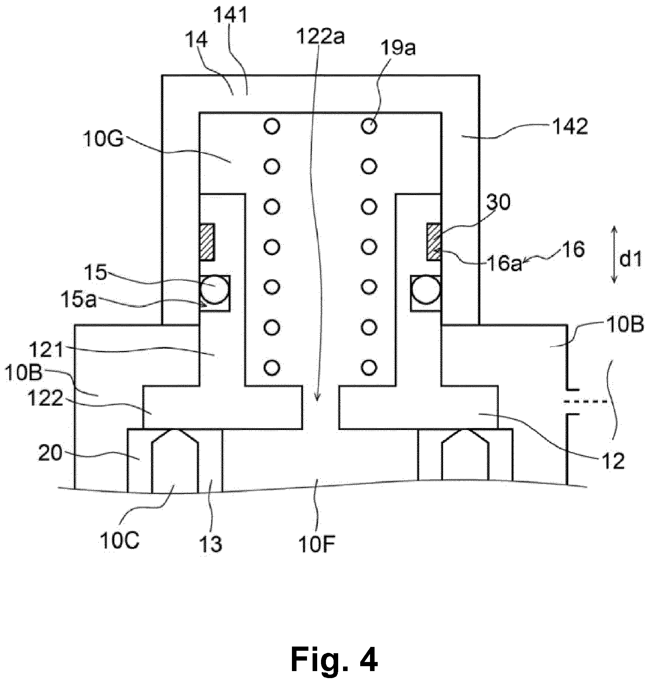

Fig. 4 illustrates the flow control valve 10 in the close state. When the second valve element contacts the first valve element 12 from the atmospheric open state, it causes the close state in which the first valve element 12 closes the passage between the introduction chamber 10B and the output chamber 10C and the output chamber 10C is shut off from the atmosphere, i.e., from the space outside the flow control valve 10. In the close state and the open state described below, the second valve element 13 contacts the bottom portion 122 of the first valve element 12. In the embodiment, when the commanded pressure is supplied to the input chamber 10A, the second valve element 13 moves following the movement of the diaphragm 18 to contact the first valve element 12. As a result, the output chamber 10C is disconnected from the hollow portion 10F that connects with the atmospheric open chamber 10D. In the close state, the high-pressure air is not supplied to the output chamber 10C and the high-pressure air is not exhausted from the output chamber 10C, so the pressure in the output chamber 10C and brake cylinder 2 is maintained at a constant level.

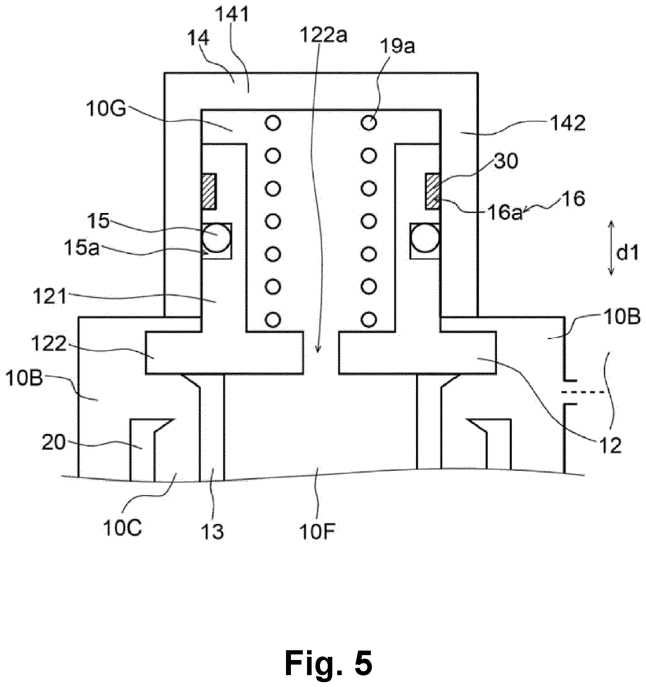

Fig. 5 illustrates the flow control valve 10 in the open state. When the second valve 13 contacts the first valve element 12 to move the first valve element 12 from the atmospheric open state, it causes the open state in which the first valve element 12 opens the passage between the introduction chamber 10B and the output chamber 10C and the output chamber 10C is shut off from the atmosphere. This allows the high-pressure air to be supplied to the brake cylinder 2. In the embodiment, when a sufficiently large commanded pressure is supplied to the input chamber 10A of the flow control valve 10 in the atmospheric open state shown in Fig. 3, the second valve element 13 moves following the movement of the diaphragm 18 to contact the first valve element 12 and further pushes the first valve element 12 against the biasing force of the spring 19a. This causes the first valve element 12 to separate from the valve seat 20, and the introduction chamber 10B and the output chamber 10C are connected to each other through the passage between the first valve element 12 and the valve seat 20. At the same time, the second valve element 13 contacts the first valve element 12, so that the output chamber 10C is disconnected from the hollow portion 10F that communicates with the atmospheric open chamber 10D. The direction in which the first valve element 12 is pushed and moved by the second valve element 13 is hereunder referred to as a moving direction d1 of the first valve element 12.

The first valve element 12 closes the passage between the introduction chamber 10B and the output chamber 10C at least when the pressure in the output chamber 10C is equal to or greater than the commanded pressure. In this embodiment, the second valve element 13 of the flow control valve 10 in the open state as shown in Fig. 5 moves away from the first valve element 12 (lower side in Fig. 5) by the biasing force of the spring 19a and spring 19b, at least when the pressure in the output chamber 10C is equal to or greater than the commanded pressure. The first valve element 12 then moves to the side where the second valve element 13 is situated (lower side in Fig. 5) by the biasing force of the spring 19a because it is no longer supported by the second valve element 13. The movements of the first valve element 12 and the second valve element 13 continue at least until the first valve element 12 contacts the valve seat 20 and the passage between the introduction chamber 10B and the output chamber 10C is closed to discontinue the introduction of the fluid into the output chamber 10C. Thus, it can be said that the first valve element 12 in the embodiment is configured to close the passage between the introduction chamber 10B and the output chamber 10C at least when the pressure in the output chamber 10C is equal to or greater than the commanded pressure.

The flow control valve 10 having the first valve element 12 and the second valve element 13 according to the embodiment is able to brake and release the brake on the railway vehicle by switching between the three states: the atmospheric open state, the close state, and the open state.

When applying the brake, the command pressure is supplied to the input chamber 10A using the commanded-pressure supply valve 4 and the second valve element 13 is moved to switch the atmospheric open state to the open state. In the open state, the high-pressure air is supplied to the brake cylinder 2 to apply the brake on the railway vehicle. When applying the brake, the introduction of the fluid into the input chamber 10A using the commanded-pressure supply valve 4 and the exhaust of the fluid from the input chamber 10A using the commanded-pressure exhaust valve 5 may be repeatedly performed to adjust the pressure in the input chamber 10A or the pressure in the output chamber 10C till it reaches a desired value corresponding to the intensity of the brake to be applied. As shown in Figs. 1 and 2, the brake system 1 is also equipped with a sensor 21 for detecting the pressure in the input chamber 10A and a sensor 22 for detecting the pressure in the output chamber 10C. In this case, the brake control unit 6 may utilize results of detections performed by the sensors 21 and 22 to control the commanded-pressure supply valve 4 and the commanded-pressure exhaust valve 5 such that the pressure in the input chamber 10A or the pressure in the output chamber 10C achieves a desired value.

When the pressure in the output chamber 10C and the pressure in the brake cylinder 2 become sufficiently high, the diaphragm 18 moves to the side opposite to where the first valve element 12 is situated such that the output chamber 10C is expanded due to the increased pressure in the output chamber 10C and in the feedback chamber 10E connected to the output chamber 10C. As the second valve element 13 moves following the movement of the diaphragm 18, the first valve element 12 is pushed by the biasing force of the spring 19a to contact the valve seat 20 again, thereby the flow control valve 10 is switched from the open state to the close state. In the close state, the pressure in the output chamber 10C and the pressure in the brake cylinder 2 are maintained at constant levels, and the brake is kept applying on the railway vehicle.

When releasing the brake, the commanded-pressure exhaust valve 5 is used to exhaust the air from the input chamber 10A, and the second valve element 13 is moved to switch the flow control valve 10 to the atmospheric open state. As a result, the air is exhausted from the output chamber 10C connected to the brake cylinder 2, thereby the brake applied to the railway vehicle is released.

As described above, by controlling the pressure in the input chamber 10A using the commanded-pressure supply valve 4 and the commanded-pressure exhaust valve 5, the mode of the flow control valve 10 can be switched to apply or release the brake depending on the pressure in the input chamber 10A. In particular, by supplying a command pressure with a small flow rate to the input chamber 10A, it is possible to cause a high pressure fluid with a large flow rate to flow from the introduction chamber 10B to the output chamber 10C.

The flow control valve 10 includes the guiding portion 14 for guiding the movement of the first valve element 12. In the example shown in Fig. 2, the guiding portion 14 has a guiding lateral portion 142 having a substantially cylindrical shape, and a guiding bottom portion 141 provided at one end of the guiding lateral portion 142 opposite to the end facing the bottom portion 122 of the first valve element 12.

The guiding portion 14 is a member that guides the movement of the first valve element 12 when the first valve element 12 is pushed by the second valve element 13 or by the biasing force of the spring 19a as described above. In the example shown in Fig. 2, at least a part of the lateral portion 121 of the first valve element 12 is inserted in the guiding lateral portion 142. The guiding portion 14 guides the movement of the first valve element 12 along the inner surface of the guiding lateral portion 142. The first valve element 12 and the guiding portion 14 are partially in contact with each other. Here, the first valve element 12 and the guiding portion 14 may be in contact with each other via a lubricant, which will be described later. In the example shown in Fig. 2, the outer surface of the lateral portion 121 of the first valve element 12 and the inner surface of the guiding lateral portion 142 of the guiding portion 14 are partially in contact with each other. As an example, the material of the guiding portion 14 contains brass or aluminum. For example, the guiding portion 14 is made of brass or aluminum.

The first valve element 12 and the guiding portion 14 define a guiding chamber 10G. In the example shown in Fig. 2, the guiding chamber 10G is a space enclosed by the lateral portion 121, the bottom portion 122, the guiding lateral portion 142, and the guiding bottom portion 141. As shown in Figs. 2-5, the guiding chamber 10G always communicates with the atmospheric open chamber 10D through the opening 122a in the bottom portion 122 and the hollow portion 10F, regardless of which state the flow control valve 10 is in: the open, closed, or atmospheric open state. Therefore, the first valve element 12 is able to move relative to the guiding portion 14 without resistance of the pressure in the guiding chamber 10G.

The sealing member 15 is a member that prevents flow of the fluid between the first valve element 12 and the guide portion 14. As shown in Fig. 2, the sealing member 15 is disposed between the first valve element 12 and the guiding portion 14. In the example shown in Fig. 2, the sealing member 15 is an O-ring provided between the lateral portion 121 of the first valve element 12 and the guiding lateral portion 142 of the guiding portion 14. Although not shown in the drawing, the sealing member 15 may be a packing provided between the first valve element 12 and the guiding portion 14. In this case, the packing has an annular shape, for example, and is disposed between the lateral portion 121 of the first valve element 12 and the guiding lateral portion 142 of the guiding portion 14. The material for the sealing member 15 is not particularly limited and may be any material generally used for O-rings or the like. For example, the material of the sealing member 15 is rubber.

In this embodiment, the sealing member 15 is provided in the first valve element 12. In the example of Fig, 2, a groove 15a is formed in the lateral portion 121 of the first valve element 12. The groove 15a has an annular shape about an axis line L1 of the first valve element 12 that extends parallel to the moving direction d1 of the first valve element 12. The sealing member 15 is provided in the first valve element 12 by being at least partially disposed in the groove 15a.

The sealing member 15 seals off the introduction chamber 10B from the atmosphere. The sealing member 15 shown in Fig. 2 is situated between the first valve element 12 and the guiding portion 14 to prevent the introduction chamber 10B from communicating with the guiding chamber 10G via the first valve element 12 and the guiding portion 14. As described above, the sealing member 15 prevents the introduction chamber 10B from communicating with the atmospheric open chamber 10D via the guiding chamber 10G, thereby sealing off the introduction chamber 10B from the atmosphere. The sealing member 15 seals off the introduction chamber 10B from the atmosphere, thereby preventing the high-pressure fluid in the introduction chamber 10B from flowing out to the outside of the flow control valve 10. Therefore, when the high-pressure fluid is supplied from the introduction chamber 10B to the brake cylinder 2 via the output chamber 10C in the open state, it is possible to prevent the high-pressure fluid from flowing out of the flow control valve 10 and prevent a reduced efficiency of pressure increase in the brake cylinder 2.

The retaining portion 16 retains the lubricant 30 supplied to the contacting surface between the first valve element 12 and the guiding portion 14. The retaining portion 16 is provided on at least one of the first valve element 12 or the guiding portion 14. In the example shown in Fig. 2, the retaining portion 16 is provided on the first valve element 12. In the example shown in Fig. 2, the retaining portion 16 is a groove 16a formed in the lateral portion 121 of the first valve element 12. In this case, as shown in Fig. 2, the lubricant 30 can be retained in the retaining portion 16 by supplying the lubricant 30 into the groove 16a, which serves as the retaining portion 16.

In the example shown in Fig. 2, the sealing member 15 and the retaining portion 16 are provided on the same side of the first valve element 12 or the guiding portion 14. In the example shown in Fig. 2, the sealing member 15 and the retaining portion 16 are both provided in the first valve element 12. Although not shown in the Fig. 2, the sealing member 15 may be provided in the first valve element 12 and the retaining portion 16 may be provided in the guide portion 14, or the sealing member 15 may be provided in the guide portion 14 and the retaining portion 16 may be provided in the first valve element 12. In the example shown in Fig. 2, the retaining portion 16 is situated on the opposite side (upper side in Fig. 2) to the side where the second valve element 13 is situated with reference to the position of the sealing member 15.

With the retaining portion 16, when the first valve element 12 is guided by the guiding portion 14 and moves relative to the guiding portion 14, the lubricant 30 retained in the retaining portion 16 spreads between the first valve element 12 and the guiding portion 14 and is supplied to the sealing member 15. Since the lubricant 30 is applied to the sealing member 15, it is possible to prevent the sealing member 15 from drying out and deteriorating due to friction caused by the relative movement of the first valve element 12 against the guiding portion 14. In particular, ozone degradation of the sealing member 15 can be prevented.

The lubricant 30 in the retaining portion 16 is not limited to any particular lubricant and can be any lubricant provided that it can be supplied to the sealing member 15 to prevent the deterioration of the sealing member 15. The lubricant 30 is, for example, grease. Here, the grease is defined according to the description in Japanese Industrial Standards, JIS K 2220: 2013. In other words, the grease is a semi-solid or solid form of a raw base oil in which thickener is dispersed.

The configuration of the retaining portion 16 is not limited provided that the lubricant 30 in the retaining portion 16 is supplied to the contacting surface between the first valve element 12 and the guiding portion 14. When the retaining portion 16 is the groove 16a as shown in Fig. 2, the groove 16a is preferably provided such that it circles about the axis line L1 of the first valve element 12 which extends parallel to the movement direction d1 of the first valve element 12. By the fact that the groove portion 16a, which is the retaining portion 16, circles the axis line L1, it is possible to retain the lubricant 30 over the entire circumference in the circumferential direction of the axis line L1 and to supply the lubricant 30 to the sealing member 15 in the entire circumference in the circumferential direction of the axis line L1. In the example shown in Fig. 2, the retaining portion 16 has an annular shape surrounding the axis line L1.

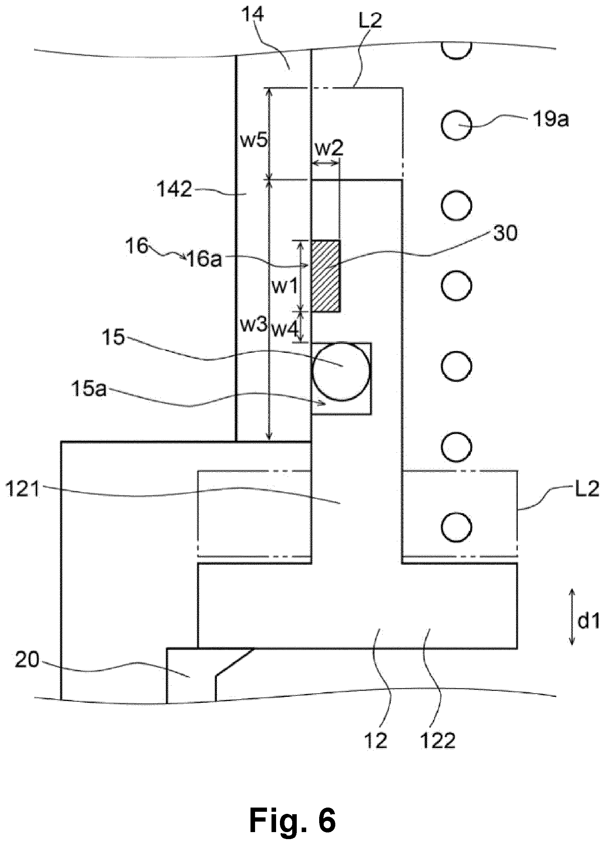

Fig. 6 is the enlarged sectional view of the flow control valve 10 shown in Fig. 2 for showing the portion where the sealing member 15 and the retaining portion 16 are provided. In the example shown in Fig. 6, the section of the groove 16a, which is the retaining portion 16, has a rectangular shape. A dimension w1 of the groove 16a in the moving direction d1 is preferably larger than a dimension w2 of the groove portion 16a in the direction perpendicular to the moving direction d1. With this configuration, it is possible to increase the contacting area between the lubricant 30 in the groove 16a and the first valve element 12 or the guiding portion 14 that faces the groove 16a, allowing the lubricant 30 to be supplied to the contacting surface between the first valve element 12 and the guiding portion 14 more efficiently.

The dimension w1 of the groove 16a, which is the retaining portion 16, in the moving direction d1 is between 0.1 to 0.4 (both inclusive) times of a dimension w3 of the contacting surface between the first valve element 12 and the guiding portion 14 in the moving direction d1 when the flow control valve 10 is in the open state. By setting the dimension w1 to 0.1 times or more of the dimension w3, it is possible to increase the contacting area between the lubricant 30 in the groove 16a and the first valve element 12 or the guiding portion 14 that faces the groove 16a, thereby the lubricant 30 can be more efficiently supplied to the contacting surface between the first valve element 12 and the guiding portion 14. If the dimension w1 is larger than 0.4 times of the dimension w3, a large amount of the lubricant 30 is supplied to the contacting surface between the first valve element 12 and the guiding portion 14, which increases the moving resistance for the first valve element 12 due to the viscosity of the lubricant 30. Further, if the dimension w1 is too large and the area of the contacting surface between the first valve element 12 and the guiding portion 14 becomes small, load generated when the first valve element 12 moves while contacting the guiding portion 14 may concentrate in a small area. By setting the dimension w1 to 0.4 times or less of the dimension w3, these drawbacks are prevented. The volume of the groove 16a, which is the retaining portion 16, is preferably between 50% and 200% (both inclusive) of the volume of the groove 15a receiving the sealing member 15 therein minus the volume of the sealing member 15.

Advantageous effects of the control flow valve 10 according to the embodiment will be now described. The sealing member 15 is provided in the flow control valve 10 to prevent the fluid from passing between the first valve element 12 and the guiding portion 14, and in particular to disconnect the introduction chamber 10B with the atmospheric open chamber 10D. However, there is a concern that the sealing member 15 may dry out and deteriorate due to friction caused by the movement of the first valve element 12 relative to the guide portion 14. In particular, there is a concern that the sealing member 15 may deteriorate due to ozone. In order to prevent such deterioration of the sealing member 15, a lubricant may be applied on the sealing member 15 in advance. However, even in this case, there is a concern that the applied lubricant may evaporate due to friction caused by the relative movement of the first valve element 12 against the guiding portion 14, and the sealing member 15 may deteriorate.

The sealing member 15 in the flow control valve 10 for brakes tends to deteriorate for the following reason. The pressure in the introduction chamber 10A is controlled to switch the state of the flow control valve 10 by moving the first valve element 12 due to the pressure difference between the introduction chamber 10A and the output chamber 10C, thereby the pressure of the high-pressure air supplied to the brake cylinder 2 is adjusted to activate the brake. Here, the first valve element 12 may be moved back and forth multiple times in order to activate the brake one time. For example, in order to actuate the brake with a desired braking force, the pressure in the input chamber 10A or output chamber 10C may be detected using the sensors 21, 22, and adjusted such that the pressure in the input chamber 10A or output chamber 10C becomes a predetermined value corresponding to the desired force. In this case, the first valve element 12 may move back and forth more than one time since the pressure in the input chamber 10A or output chamber 10C is adjusted to the predetermined value. Thus, in the flow control valve 10 for brakes, it can be said that the first valve element 12 is a component that is likely to move back and forth a relatively large number of times. As described above, such a reciprocating movement of the first valve element 12 is considered to promotes deterioration of the sealing material 15 due to drying, etc.

Whereas in the flow control valve 10 according to the embodiment, the lubricant 30 is supplied to the sealing member 15 from the retainer 16. The lubricant 30 in the retaining portion 16 is supplied to the sealing member 15 in small amounts over a long period of time as the first valve element 12 moves back and forth. This prevents the sealing member 15 from drying out and deteriorating due to evaporation of the lubricant 30. In particular, even when the number of reciprocating movements of the first valve element 12 is increased in the flow control valve 10 for brakes, it is possible to prevent the sealing member 15 from drying out and deteriorating.

In some cases, to reduce the time and effort required to refuel the air compressor and to reduce the environmental impact, an oilless compressor may be used as the air compressor 3 that generates the high-pressure air to be introduced into the introduction chamber 10B. In this case, the high-pressure air generated by the oilless air compressor is introduced into the introduction chamber 10B as the fluid. The oilless air compressor produces a dry high-pressure air with a lower oil concentration than the oil-injected compressor. In the flow control valve 10 according to the embodiment, even when particularly dry high-pressure air is introduced into the introduction chamber 10B since such an oilless air compressor is used, it is still possible to deterioration of the sealing member 15 caused by drying. The term "oilless air compressor" herein refers to an air compressor in which, for example, lubricating oil or the like is not supplied to sliding or rotating parts in the air compressor.

According to the embodiment, the lubricant 30 is supplied from the retaining portion 16 to the contacting surface between the first valve element 12 and the guiding portion 14, thereby reducing loads on the first valve element 12 and the guiding portion 14 and also suppressing wear of the first valve element 12 and the guiding portion 14. While friction-resistant materials such as pure iron and stainless steel may be used for the components of the solenoid valves employed as the commanded-pressure supply valve 4 and the commanded-pressure exhaust valve 5 in the embodiment, brass or aluminum, which are relatively weak against friction, may be used for the first valve element 12 and the guiding portion 14 of the flow control valve 10. The retaining portion 16 can suppress wear of the first valve element 12 and the guiding portion 14 even when the first valve element 12 and the guiding portion 14 are made of brass or aluminum. As discussed above, the feature of the flow control valve 10 having the retaining portion 16 is particularly effective when the first valve element 12 and the guiding portion 14 are made of brass or aluminum.

In the example shown in Fig. 2, the sealing member 15 and the retaining portion 16 are provided on the same side of the first valve element 12 or the guiding portion 14. In the example shown in Fig. 2, the sealing member 15 and the retaining portion 16 are both provided in the first valve element 12. An advantageous effect of this configuration will now be explained. If one of the sealing member 15 or the retaining portion 16 is provided in the first valve element 12 and the other is provided in the guiding portion 14, there is a possibility that sealing by the sealing member 15 may break when the sealing member 15 and the retaining portion 16 face each other depending on the shape of the retaining portion 16. Whereas when the sealing member 15 and the retaining portion 16 are provided on the same side, the sealing member 15 and the retaining portion 16 will not face each other depending on the movement of the first valve element 12. In this case, regardless of the shape of the retaining portion 16, the sealing member 15 and the retaining portion 16 never face each other and the sealing by the sealing member 15 will not break. Therefore, the shape of the retaining portion 16 can be freely designed. For example, the volume and dimension w1 of the groove 16a, which is the retaining portion 16, may be increased so that a larger amount of the lubricant 30 is retained therein.

A distance w4 between the sealing member 15 and the retaining portion 16 in the moving direction d1 of the first valve element 12 shown in Fig. 6 is equal to or smaller than a movable distance of the first valve element 12. In the state shown in Fig. 6, the flow control valve 10 is open to the atmosphere and the first valve element 12 is not pushed by the second valve element 13. The double-dotted line L2 in Fig. 6 is an imaginary line that indicates the position of the first valve element 12 when it is pushed by the second element 13 and is displaced the longest distance from the position in the atmospheric open state. Here, the distance w5 shown in Fig. 6 is the movable distance of the first valve element 12.

When the distance w4 is smaller than the movable distance w5, the sealing member 15 comes into direct contact with the portion of the first valve element 12 or the guiding portion 14 that contacts the retaining portion 16. Consequently, the lubricant 30 can be efficiently supplied to the sealing member 15.

While the foregoing has described the embodiment with reference to specific examples, these specific examples are not intended to limit the embodiment.

With reference to the appended drawings, the following describes a modification example. In the following description and the drawings used therein, parts that can be configured in a similar manner to those in the foregoing specific example are denoted by the same reference signs as those in the foregoing specific example and are not described again.

### Modification Example 1

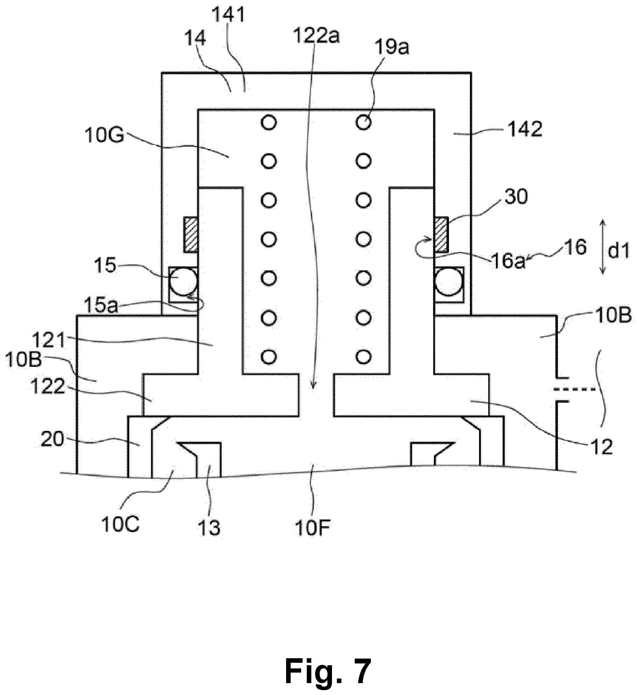

In the above embodiment, the sealing member 15 and the retaining portion 16 are both provided in the first valve element 12 as one example of the case where the sealing member 15 and the retaining portion 16 are both provided on the same side of the first valve element 12 or the guiding portion 14. However, the configuration of the sealing member 15 and the retaining portion 16 is not limited to this. Fig. 7 shows a sectional view of the flow control valve 10 in a first modification example. In the example shown in Fig. 7, the sealing member 15 and the retaining portion 16 are both provided in the guiding portion 14. In particular, in the example shown in Fig. 7, the sealing member 15 is disposed in the groove 15a formed in the guiding portion 14. The retaining portion 16 is a groove 16a formed in the guiding portion 14. From the viewpoint of facilitating installation of the sealing member 15 in the groove 15a and the supply of lubricant 30 to the retaining portion 16, it is preferable that the sealing member 15 and the retaining portion 16 be both provided in the first valve element 12 rather than both being provided in the guiding portion 14.

### Modification Example 2

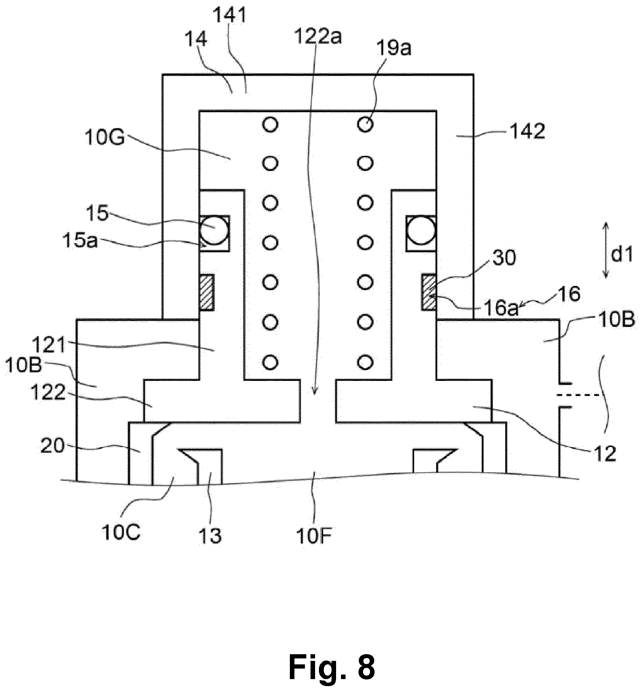

In the above embodiment and modification example, the retaining portion 16 is situated on the opposite to the second valve element 13 with reference to the position of the sealing member 15. However, the arrangement of the retaining portion 16 is not limited to this. Fig. 8 is a sectional view of the flow control valve 10 according to a second modification example. In the example shown in Fig. 8, the retaining portion 16 is situated on the side (lower side in Fig. 8) where the second valve element 13 is situated with reference to the position of the sealing member 15. Even in this case, it is possible to spread the lubricant 30 in the retaining portion 16 on the surface between the first valve element 12 and the guide portion 14 to supply the lubricant 30 to the sealing member 15. Although not shown, the retaining portion 16 may be provided both on the side where the second valve element 13 is situated and on the opposite side to where the second valve element 13 is situated with reference to the position of the sealing member 15.

In the embodiments disclosed herein, an object that are composed of multiple components may be integrated into a single body object, or conversely, an object composed of a single component may be divided into multiple components. As long as it is configured such that the purpose of the invention can be achieved, such components may be integrated or separately provided.

### LIST OF REFERENCE NUMBERS

- 1: brake system
- 2: brake cylinder
- 3: air compressor
- 4: commanded-pressure supply valve
- 5: commanded-pressure exhaust valve
- 6: brake control unit (control circuit)
- 10: flow control valve
- 10A: input chamber
- 10B: introduction chamber
- 10C: output chamber
- 10D: atmospheric open chamber
- 11: main body
- 12: first valve element
- 13: second valve element
- 14: guiding portion
- 15: sealing member
- 16: retaining portion
- 18: diaphragm
- 20: valve seat
- 21, 22: sensor
- 30: lubricant

## Claims

1. A flow control valve (10) for brakes, comprising:
an introduction chamber (10B) into which fluid is introduced from a pressure fluid source;
an output chamber (10C) connected to a brake device, the output chamber (10C) communicating with the introduction chamber (10B) through a passage;
an input chamber (10A) to which a commanded pressure for generating a target braking force in the brake device is supplied;
a first valve element (12) moving depending on a differential pressure between the command pressure and a pressure in the output chamber (10C) to open and close the passage, the first valve element (12) closing the passage at least when the pressure in the output chamber (10C) is equal to or greater than the command pressure;
a guiding portion (14) guiding movement of the first valve element (12); and
a sealing member (15) provided between the first valve element (12) and the guiding portion (14), the sealing member (15) preventing the fluid from passing between the first valve element (12) and the guiding portion (14),
**characterized by** further comprising:
a retaining portion (16) provided in at least one of the first valve element (12) or the guiding portion (14), the retaining portion (16) retaining lubricant supplied to a contacting surface between the first valve element (12) and the guiding portion (14), wherein a distance (w4) between the sealing member (15) and the retaining portion (16) in a moving direction (d1) of the first valve element (12) is equal to or smaller than a movable distance (w5) of the first valve element (12).

2. The flow control valve (10) according to claim 1, wherein the sealing member (15) and the retaining portion (16) are provided on a same side of the first valve element (12) or the guiding portion (14).

3. The flow control valve (10) according to claim 1 or 2, wherein the first valve element (12) and the guiding portion (14) are made of brass or aluminum.

4. The flow control valve (10) according to any one of claims 1 to 3, wherein high-pressure air generated by an oilless air compressor is introduced into the introduction chamber (10B) as the fluid.

5. The flow control valve (10) according to any one of claims 1 to 4, further comprising:
a second valve element (13) moving depending on a differential pressure between the command pressure and the pressure in the output chamber (10C) to move the first valve element (12),
wherein the second valve element (13) moves away from the first valve element (12) to cause an atmospheric open state in which the first valve element (12) closes the passage and the output chamber (10C) is opened to atmosphere, and
wherein the second valve element (13) contacts the first valve element (12) from the atmospheric open state and moves the first valve element (12) to cause an open state in which the first valve element (12) opens the passage and the output chamber (10C) is shut off from the atmosphere.

6. The flow control valve (10) according to claim 5, wherein the second valve element (13) contacts the first valve element (12) from the atmospheric open state and moves the first valve element (12) to cause a close state in which the first valve element (12) closes the passage and the output chamber (10C) is shut off from the atmosphere.

7. The flow control valve (10) according to any one of claims 1 to 6, wherein the sealing member (15) seals off the introduction chamber (10B) from the atmosphere.

8. A brake system (1) for railway vehicles, comprising:
a brake device for braking a railway vehicle;
**characterized by** further comprising a flow control valve (10) according to claim 1 and commanded-pressure supply valve (4) for supplying the commanded pressure to the flow control valve input chamber (10A); and
a commanded-pressure exhaust valve (5) for discharging the commanded pressure from the flow control valve input chamber (10A),

9. The brake system (1) according to claim 8, further comprising an oilless air compressor generating high-pressure air that is to be introduced into the introduction chamber (10B) as the fluid.

## Patentansprüche

1. Stromregelventil (10) für Bremsen, das umfasst:
eine Einleitkammer (10B), in die Fluid von einer Druckfluid-Quelle eingeleitet wird;
eine Ausgabekammer (10C), die mit einer Bremsvorrichtung verbunden ist, wobei die Ausgabekammer (10C) über einen Durchlass mit der Einleitkammer (10B) in Verbindung steht;
eine Eingabekammer (10A), der ein Solldruck zum Erzeugen einer Soll-Bremskraft in der Bremsvorrichtung zugeführt wird;
ein erstes Ventilelement (12), das sich in Abhängigkeit von einem Differenzdruck zwischen dem Solldruck und einem Druck in der Ausgabekammer (10C) bewegt, um den Durchlass zu öffnen und zu schließen, wobei das erste Ventilelement (12) den Durchlass wenigstens dann schließt, wenn der Druck in der Ausgabekammer (10C) auf oder über dem Solldruck liegt;
einen Führungsabschnitt (14), der Bewegung des ersten Ventilelementes (12) führt;
sowie
ein Dichtungselement (15), das zwischen dem ersten Ventilelement (12) und dem Führungsabschnitt (14) vorhanden ist, wobei das Dichtungselement (15) verhindert, dass das Fluid zwischen dem ersten Ventilelement (12) und dem Führungsabschnitt (14) hindurchtritt,
**dadurch gekennzeichnet, dass** es des Weiteren umfasst:
einen Rückhalteabschnitt (16), der in dem ersten Ventilelement (12) oder/und dem Führungsabschnitt (14) vorhanden ist, wobei der Rückhalteabschnitt (16) Schmiermittel zurückhält, das einer Kontaktfläche zwischen dem ersten Ventilelement (12) und dem Führungsabschnitt (14) zugeführt wird, und ein Abstand (w4) zwischen dem Dichtungselement (15) und dem Rückhalteabschnitt (16) in einer Bewegungsrichtung (d1) des ersten Ventilelementes (12) genauso groß ist wie oder kleiner als eine Bewegungsstrecke (w5) des ersten Ventilelementes (12).

2. Stromregelventil (10) nach Anspruch 1, wobei das Dichtungselement (15) und der Rückhalteabschnitt (16) auf ein und derselben Seite des ersten Ventilelementes (12) oder des Führungsabschnitts (14) vorhanden sind.

3. Stromregelventil (10) nach Anspruch 1 oder 2, wobei das erste Ventilelement (12) und der Führungsabschnitt (14) aus Messing oder Aluminium bestehen.

4. Stromregelventil (10) nach einem der Ansprüche 1 bis 3, wobei von einem Trockenlauf-Luftkompressor erzeugte Hochdruck-Luft als das Fluid in die Einleitkammer (10B) eingeleitet wird.

5. Stromregelventil (10) nach einem der Ansprüche 1 bis 4, das des Weiteren umfasst:
ein zweites Ventilelement (13), das sich in Abhängigkeit von einem Differenzdruck zwischen dem Solldruck und dem Druck in der Ausgabekammer (10C) bewegt, um das erste Ventilelement (12) zu bewegen,
wobei sich das zweite Ventilelement (13) von dem ersten Ventilelement (12) weg bewegt, um einen atmosphärischen offenen Zustand herbeizuführen, in dem das erste Ventilelement (12) den Durchlass schließt und die Ausgabekammer (10C) zur Atmosphäre hin geöffnet ist, und
das zweite Ventilelement (13) mit dem ersten Ventilelement (12) von dem atmosphärischen offenen Zustand ausgehend in Kontakt kommt und das erste Ventilelement (12) bewegt, um einen offenen Zustand herbeizuführen, in dem das erste Ventilelement (12) den Durchlass öffnet und die Ausgabekammer (10C) von der Atmosphäre abgeschnitten ist.

6. Stromregelventil (10) nach Anspruch 5, wobei das zweite Ventilelement (13) mit dem ersten Ventilelement (12) von dem atmosphärischen offenen Zustand ausgehend in Kontakt kommt und das erste Ventilelement (12) bewegt, um einen geschlossenen Zustand herbeizuführen, in dem das erste Ventilelement (12) den Durchlass schließt und die Ausgabekammer (10C) von der Atmosphäre abgeschnitten ist.

7. Stromregelventil (10) nach einem der Ansprüche 1 bis 6, wobei das Dichtungselement (15) die Einleitkammer (10B) gegenüber der Atmosphäre abdichtet.

8. Bremssystem (1) für Schienenfahrzeuge, das umfasst:
eine Bremsvorrichtung zum Bremsen eines Schienenfahrzeugs;
**dadurch gekennzeichnet, dass** es des Weiteren ein Stromregelventil (10) nach Anspruch 1
und
ein Solldruck-Zuführventil (4) zum Zuführen des Solldrucks zu der Eingabekammer (10A) des Stromregelventils; sowie
ein Solldruck-Ableitventil (5) zum Ableiten des Solldrucks aus der Eingabekammer (10A) des Stromregelventils umfasst.

9. Bremssystem (1) nach Anspruch 8, das des Weiteren einen Trockenlauf-Luftkompressor umfasst, der Hochdruck-Luft erzeugt, die als das Fluid in die Einleitkammer (10B) eingeleitet werden soll.

## Revendications

1. Vanne de régulation de flux (10) pour freins comprenant :
une chambre d'introduction (10B) dans laquelle du fluide est introduit depuis une source de fluide sous pression ;
une chambre de sortie (10C) raccordée à un dispositif de frein, la chambre de sortie (10C) communiquant avec la chambre d'introduction (10B) par le biais d'un passage ;
une chambre d'entrée (10A) à laquelle est fournie une pression commandée pour générer une force de freinage cible dans le dispositif de frein ;
un premier élément de vanne (12) se déplaçant en fonction d'une pression différentielle entre la pression de commande et une pression dans la chambre de sortie (10C) pour ouvrir et fermer le passage, le premier élément de vanne (12) fermant le passage au moins lorsque la pression dans la chambre de sortie (10C) est égale ou supérieure à la pression de commande ;
une partie de guidage (14) guidant le déplacement du premier élément de vanne (12) ; et
un élément d'étanchéité (15) prévu entre le premier élément de vanne (12) et la partie de guidage (14), l'élément d'étanchéité (15) empêchant le passage du fluide entre le premier élément de vanne (12) et la partie de guidage (14),
**caractérisée en ce qu'**elle comprend en outre :
une partie de retenue (16) prévue dans au moins l'un parmi le premier élément de vanne (12) ou la partie de guidage (14), la partie de retenue (16) retenant du lubrifiant fourni à une surface de contact entre le premier élément de vanne (12) et la partie de guidage (14), dans laquelle une distance (w4) entre l'élément d'étanchéité (15) et la partie de retenue (16) dans une direction de déplacement (d1) du premier élément de vanne (12) est égale ou inférieure à une distance mobile (w5) du premier élément de vanne (12).

2. Vanne de régulation de flux (10) selon la revendication 1, dans laquelle l'élément d'étanchéité (15) et la partie de retenue (16) sont prévus sur un même côté du premier élément de vanne (12) ou de la partie de guidage (14).

3. Vanne de régulation de flux (10) selon la revendication 1 ou 2, dans laquelle le premier élément de vanne (12) et la partie de guidage (14) sont réalisés à partir de laiton ou d'aluminium.

4. Vanne de régulation de flux (10) selon l'une quelconque des revendications 1 à 3, dans laquelle l'air à haute pression généré par un compresseur d'air sans huile est introduit dans la chambre d'introduction (10B) en tant que fluide.

5. Vanne de régulation de flux (10) selon l'une quelconque des revendications 1 à 4, comprenant en outre :
un second élément de vanne (13) se déplaçant en fonction d'une pression différentielle entre la pression de commande et la pression dans la chambre de sortie (10C) pour déplacer le premier élément de vanne (12),
dans laquelle le second élément de vanne (13) s'éloigne du premier élément de vanne (12) pour provoquer un état ouvert atmosphérique dans lequel le premier élément de vanne (12) ferme le passage et la chambre de sortie (10C) est ouverte à l'atmosphère, et
dans laquelle le second élément de vanne (13) est en contact avec le premier élément de vanne (12) à partir de l'état ouvert atmosphérique et déplace le premier élément de vanne (12) pour provoquer un état ouvert dans lequel le premier élément de vanne (12) ouvre le passage et la chambre de sortie (10C) est coupée de l'atmosphère.

6. Vanne de régulation de flux (10) selon la revendication 5, dans laquelle le second élément de vanne (13) est en contact avec le premier élément de vanne (12) à partir de l'état ouvert atmosphérique et déplace le premier élément de vanne (12) pour provoquer un état de fermeture dans lequel le premier élément de vanne (12) ferme le passage et la chambre de sortie (10C) est coupée de l'atmosphère.

7. Vanne de régulation de flux (10) selon l'une quelconque des revendications 1 à 6, dans laquelle l'élément d'étanchéité (15) scelle la chambre d'introduction (10B) de l'atmosphère.

8. Système de frein (1) pour véhicules ferroviaires, comprenant :
un dispositif de frein pour freiner un véhicule ferroviaire ;
**caractérisé en ce qu'**il comprend en outre une vanne de régulation de flux (10) selon la revendication 1 et une vanne d'alimentation en pression commandée (4) pour fournir la pression commandée à la chambre d'entrée (10A) de vanne de régulation de flux ; et
une vanne d'évacuation de pression commandée (5) pour décharger la pression commandée de la chambre d'entrée (10A) de vanne de régulation de flux.

9. Système de frein (1) selon la revendication 8, comprenant en outre un compresseur d'air sans huile générant de l'air à haute pression qui doit être introduit dans la chambre d'introduction (10B) en tant que fluide.
